# EUROPEAN PATENT APPLICATION

(11) **EP 2 202 252 A2**
(43) Date of publication of application: **30.06.2010**
(21) Application number: 09180806.3
(22) Date of filing: 28.12.2009
(51) Int. Cl.: C08F 212/08, C08F 212/10

(54) **Vinyl acetate/butenedioic acid cycloalkyl ester copolymers and uses thereof**

(30) Priority: 29.12.2008 US 203750 P
(71) Applicant: Celanese Emulsions GmbH, 61476 Kronberg/Ts. (DE)
(72) Inventor: McLennan, Alistair John, 61462, Koenigstein (DE); Zeimentz, Peter M., 50667 Köln (DE)
(74) Representative: von Kreisler Selting Werner

(57) **Abstract**

A polymer composition is typically obtainable by reacting: a) 40-90 pphwm of vinyl acetate; b) 30-5 pphwm of cycloalkyl esters of a butenedioic acid; and optionally c) 30-5 pphwm of vinyl esters of α-monosubstituted fatty acids; and/or d) 20-5 pphwm of an α-olefin monomer; and/or e) 20-0.1 pphwm of a functional monomer unit such as as self-crosslinking monomer. The polymer is composed and synthesized so as to be useful for one or more of: emulsions, in general; paints, including high pigment volume paints and other decorative coatings; adhesives for porous substrates such as wood or non-porous substrates such as metals, plastics or glass; binders for fibrous substrates such as woven or nonwoven products including textiles, apparel in general, papers, scrim, engineered fabrics, glass or other mineral fibers, roofing or flooring materials; construction compositions including cementitious compositions, caulks and sealants; functional coatings for waterproofing and so forth; powders such as redispersible powders for waterproofing, adhesives and the like.

## Description

### Claim for Priority

This Application is based upon United States Provisional Patent Application Serial No. 61/203,750 of the same title filed on December 29, 2009. The priority of United States Provisional Patent Application Serial No. 61/203,750 is hereby claimed and its disclosure incorporated herein by reference.

### Field of the Invention

This invention relates to the preparation of novel polymers comprising vinyl acetate and butenedioic acid cycloalkyl esters such as dicyclohexylmaleate (DCHM) monomers. The polymers may optionally contain one or more additional comonomers selected from, for example, N-methylol(meth)acrylamide and vinyl 2-ethyl hexanoate and ethylene among them. Such polymers have utility in a variety of applications, especially as binders for use in fibrous products.

### Background of the Invention

The use of aqueous copolymers as binders for bonding and coating fiber structures such as woven fabrics, nonwovens and waddings of textile fiber or textile yarns is known. Copolymers of vinyl ester copolymers which comprise self-crosslinking comonomer units with N-methylol or N-methylol ether functions to improve their strength are often used. Up to 10% by weight of N-methylol(meth)acrylamide (NMA or NMMA) are usually copolymerized. *So also,* binders for nonwovens based on self crosslinking, ethylene-vinyl acetate-maleate copolymers (EVA-maleate copolymers) are disclosed on United States Patent No. 4,702,957 to Mudge*.* According to the '957 patent, acrylic latexes have generally been used as binders where softness is the most important criteria; however the resultant nonwovens have suffered in strength, whereas ethylene/vinyl acetate-based binders yield the necessary strength properties but are deficient in softness for some applications requiring extreme softness. Efforts have been made to soften the ethylene/vinyl acetate binders by interpolymerization with the appropriate acrylate functionalities; however, this has also only been accomplished with a consequent reduction in the strength of the binder. As a result of this loss in strength, no more than 25% by weight acrylate functional had been employed in ethylene/vinyl acetate based binders for nonwovens. The '957 patent further reports that nonwovens were prepared with binders containing dialkyl maleate monomers, possessing the desirable softness characteristic of binders containing high acrylate content, without reduction in tensile strength properties even after wetting.

United States Patent Application Publication No. US2005/0009428 of Porter et al*.* discloses coated reinforcing fabrics for cementitious materials. A resinous coating is generally disclosed which could include among many other polymers, vinyl esters.

Japanese Patent Application Publication No. 2004-217724 of Seiji et al*.* discloses an aqueous emulsion which has excellent water resistance, polymerization stability and storage stability and a process to prepare the emulsion polymer. The vinyl ester monomer that can be used is vinyl acetate with the addition of ethylene. The emulsion can be used as an adhesive for paper coatings, general woodwork, and as a binder for nonwoven products.

United States Patent Application Publication No. 2002/0065361 of Tanimoto et al*.* discloses a polyvinyl ester resin emulsion having a high viscosity and good water resistance. The emulsion is produced in a method of polymerizing a vinyl ester monomer in the presence of polyvinyl alcohol serving as the protective colloid and in the presence of a water-insoluble, hydroxyl-group containing compound, and can be used as an adhesive that can be readily formed into transparent films. Vinyl esters that can be used in the invention include vinyl formate, vinyl acetate, vinyl propionate, and vinyl pivalate. Ethylene can be added to the emulsion in the range of 3-35 wt% to improve water resistance and heat resistance.

Dicyclohexyl fumarate containing resins are disclosed in Japanese Patent Application Nos. JP 2001-130871 and JP 2001-38515 in connection with electronic applications; for example, in applications where dielectric properties are important.

United States Patent Application Publication No. 2007/0184732 of Lunsford et al*.* discloses a high strength polyvinyl acetate binder utilized for fibrous substrates. The composition of the binder is comprised of water and an emulsion resin comprising from 50 pphwn to 100 pphwn vinyl acetate monomer units and from 4 to 15 pphwn post-crosslinking monomer composition.

United States Patent No. 5,434,216 to Mudge et al*.* discloses a latex adhesive used for woodworking having improved water, heat, and creep resistance. The composition of the adhesive is based on vinyl acetate / N-methylolacrylamide polymer emulsions which are stabilized with 1.5 to 2.5% by weight of 88% hydrolyzed polyvinyl alcohol and 1 to 4% by weight of 95-99.5% hydrolyzed polyvinyl alcohol, the two alcohols comprising at least 3% by weight of the emulsion solids. The N-methylolacrylamide and vinyl acetate copolymers can also be used in combination with: (1) other vinyl esters including vinyl formate, vinyl propionate, vinyl butyrate, vinyl isobutyrate, vinyl valerate, vinyl 2-ethylheanoate, vinyl isooctanoate, vinyl nonoate, vinyl decanoate, vinyl pivalate, vinyl versatate, and the like; (2) ethylene; (3) alkyl esters of acrylic and methacrylic acid such as methyl acrylate, methyl methacrylate, ethyl acrylate, ethyl methacrylate, etc.; (4) substituted or unsubstituted mono and dialkyl esters of α, β-unsaturated dicarboxylic acids such as the substituted and unsubstituted mono and dibutyl, mono and diethyl maleate esters as well as the corresponding fumarates, itaconates and citronates; (5) α, β-unsaturated carboxylic acids such as crotonic, acrylic, methacrylic, fumaric, maleic, itaconic and citraconic acids.

It is an object of the invention to provide emulsion copolymers comprising vinyl acetate and cycloalkyl esters of butenedioic acids, optionally with additional monomer units including crosslinking functionalities, as well as products including such copolymers, to improve properties such as, for example, solvent resistance, dry strength, wet strength, hydrophobicity, alkaline aging resistance and so forth in the articles and compositions as described more fully hereinafter.

### Summary of the Invention

A polymer composition comprising a copolymer obtainable by reacting: a) 10-90 pphwm, preferably 40-90 pphwm of vinyl acetate; b) 80-1 pphwm, preferably 60-5 pphwm, more preferably 40-5, most preferably 20-5 pphwm of at least one cycloalkyl ester of a butenedioic acid, such as dicyclohexyl maleate; and optionally c) 20-0.1 pphwm, preferably 10 - 0.1 pphwm, more preferably 8 - 0.5 pphwm of at least one functional monomer, and/or d) 30-5 pphwm, preferably 20-5 pphwm, more preferably 20-10 pphwm of at least one vinyl ester of α-monosubstituted fatty acid; and/or e) 20-5 pphwm, more preferably 15-5 pphwm of at least one α-olefin; and/or f) other comonomers, wherein said polymer is composed and synthesized so as to be useful for one or more of: emulsions, in general; paints, including high pigment volume paints or other decorative coatings; adhesives for porous substrates such as wood or non-porous substrates such as metals, plastics or glass; binders for fibrous substrates such as woven or nonwoven products including textiles, apparel in general, papers, scrim, engineered fabrics, glass or other mineral fibers, roofing or flooring materials; construction compositions including cementitious compositions, caulks and sealants; functional coatings for waterproofing and so forth; powders such as redispersible powders for waterproofing, adhesives and the like.

Further details and uses will become apparent from the discussion which follows.

### Detailed Description of the Invention

The invention is described in detail below with reference to several embodiments and numerous examples. Such discussion is for purposes of illustration only. Modifications to particular examples within the spirit and scope of the present invention will be readily apparent to one of skill in the art. Terminology used herein is given its ordinary meaning consistent with the exemplary definitions herein.

The term "functional monomer" includes self-crosslinking monomers as well as monomers with functional moieties, including stabilizing moieties such as ionic groups or hydroxyl groups capable of reacting with a crosslinking material and so forth.

The abbreviation "pphwm" refers to parts per hundred weight monomer based on monomer supplied to the reaction medium unless otherwise indicated.

The terminology "alkyl (meth)acrylate" refers to alkyl acrylates and alkyl methacrylates, typically C₁-C₁₂ alkyl such as n-butyl acrylate and so forth.

Other terminology and abbreviations are noted below.

Polymers of this invention are predominantly comprised of vinyl acetate monomer (VA) and monomers from cycloalkyl esters of a butenedioic acid such as dicyclohexylmaleate (DCHM) in many embodiments. Dicyclohexyl maleate has the following structure:

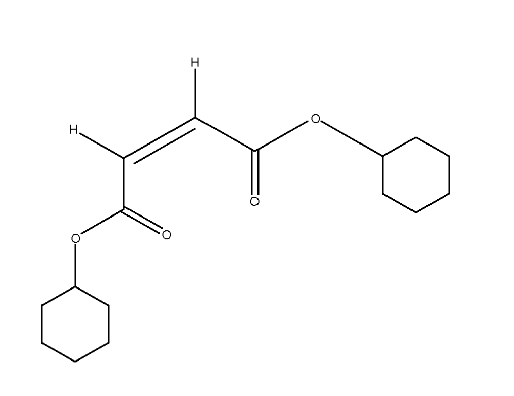

Another cycloalkyl ester of butenedioic acid which is suitable is the trans isomer:

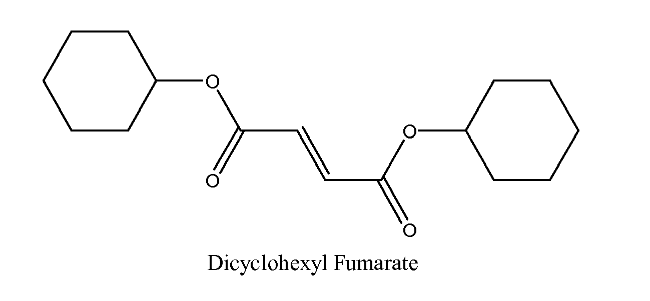

Additional monomers such as α-olefin monomers, vinyl esters of α-monosubstituted fatty acids, functional monomers and/or neoalkanoic acid vinyl esters are also optionally provided. Examples of suitable α-olefin monomers include ethylene, propylene, α-butylene, α-pentylene, α-hexylene , α-octylene and so forth.

Vinyl esters of α-monosubstituted fatty acids include vinyl 2-ethylhexanoate (V2EH) in many embodiments: 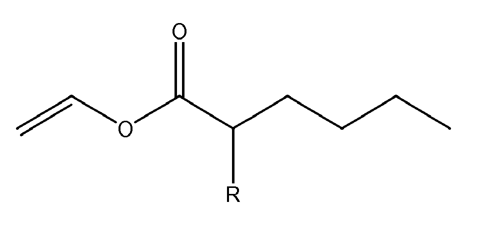 Vinyl 2-ethylhexanoate is where R = ethyl

More generally, any α-monosubstituted alkanoic acid vinyl ester may be used, for example, alkanoic acid esters of the formula:

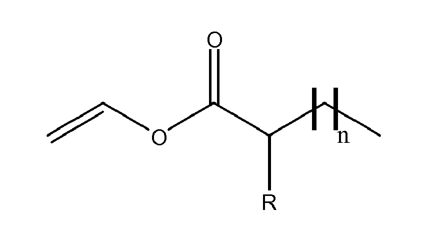

R = straight chain, branched or cyclic alkyl groups, for example, 2-alkylbutanoic acid (n=1) or 2-alkylpropanoic acid is where n=0; n is suitably 2-20. Suitable branched acid alkanoates may also be found in United States Patent No. 5,371,137 to Blincow et al*.,* the disclosure of which is incorporated herein by reference.

Preferred polymers include emulsion interpolymers as described herein, however the optional inclusion of other comonomers is contemplated. Other potentially useful comonomers include 1-heptene, butadiene, hexadiene, isoprene, styrene, methyl styrene, divinyl benzene and the like. Representative of still other ethylenically unsaturated monomers include halogenated monomers such as vinyl chloride, vinylidene chloride, chloroprene, chlorostyrene and the like.

The inventive copolymers may be made by a variety of techniques by which vinyl acetate polymers are made including by bulk, solution, suspension and emulsion processes as is described in the Kirk-Othmer Encyclopedia of Chemical Technology, 4th Ed., Vol. 24, pp. 954-963 (Wiley 1996), the disclosure of which is incorporated herein by reference. The preparation of the inventive compositions can be carried out using continuous or discontinuous processes of free-radical emulsion polymerization. The polymerization may be conducted with the assistance of customary reaction vessels such as loop or stirred reactors. Preference is given to using discontinuous processes such as batch, combined batch/feed stream, pure feed stream processes or feed stream processes onto nucleating particles.

In these processes, water-soluble and/or oil-soluble initiator systems such as peroxodisulfates, azo compounds, hydrogen peroxide, organic hydroperoxides or dibenzoyl peroxide are employed. These may be used either by themselves or in combination with reducing compounds such as Fe(II) salts, sodium pyrosulfite, sodium hydrogen sulfite, sodium sulfite, sodium dithionite, sodium formaldehyde-sulfoxylate, ascorbic acid, as a redox catalyst system. The emulsifiers, and /or where appropriate, protective colloids, additives and/or auxiliaries may be added before, during or after the polymerization. Examples of emulsifiers include alkyl aryl polyglycol ethers and alkyl polyglycol ethers each preferably having from 8 to 50 mol of ethylene oxide units per molecule, block copolymers of ethylene oxide with propylene oxide, alkylsulfonates or alkyarylsulfonates, alkyl sulfates, alkyl and aryl ether sulfates and phosphates each having preferably from 8 to 18 carbon atoms in the lipophilic part and up to 50 ethylene oxide or propylene oxide units in the hydrophilic part, and also monoesters or diesters of sulfosuccinic acid or alkylphenols each having preferably from 8 to 18 carbon atoms in the alkyl radical. A preferred type of emulsifier does not contain linear alkyl phenol units in the lipophilic part.

Optionally, the polymeric compositions of the invention are grafted onto a polyhydroxy polymer, such as polyvinyl alcohol (PVOH), i.e.:

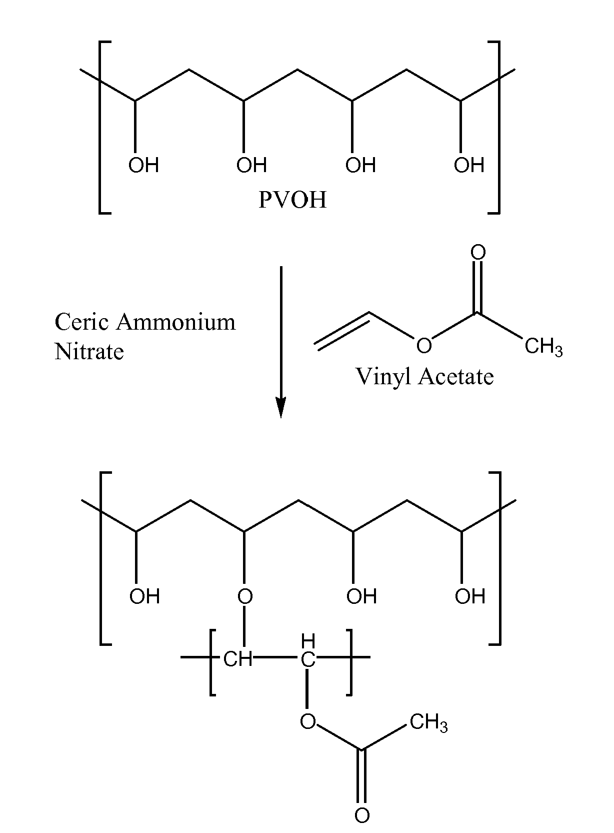

As is described in United States Patent No. 5,354,803 to Dragner et al*.,* the disclosure of which is incorporated herein by reference. Any suitable technique for grafting the composition with a suitable polymer may be used. Other suitable polyhydroxy compounds for grafting may include sugars, cellulose and starch.

Optionally, the inventive copolymers are obtainable by reacting comonomers a) - e) in the presence of esters of ethylenically unsaturated carboxylic acids such as alkyl acrylates and methacrylates wherein the alkyl group contains 1-12 or 1-10 carbon atoms and esters of such acids as butenoic, maleic, fumaric, itaconic and the like. Representative of other esters which have an ethylenic unsaturation and are preferred include vinyl formate, vinyl versatate, and the like. The polymer backbone in the acrylic ester latexes can be either hydrophilic or hydrophobic and it can comprise polymerized soft monomers and/or hard monomers. The soft and hard monomers are monomers which, when polymerized, produce soft or hard polymers, or polymers in between. Preferred soft acrylic ester monomers are selected from alkyl acrylates containing 2 to 8 carbon atoms in the alkyl group and include ethyl acrylate, propyl acrylate, n-butyl acrylate, and 2-ethylhexyl acrylate. The hard acrylic ester monomers are selected from alkyl methacrylates containing up to 3 carbon atoms in the alkyl group and from non-acrylic monomers such as styrene and substituted styrenes, acrylonitrile, vinylchloride, and generally any compatible monomer the homopolymer of which has a Tg above 50°C. Preferred acrylic ester monomers are selected from alkyl methacrylates containing 1 to 12 carbon atoms in the alkyl group, especially methyl methacrylate. See United States Patent No. 5,021,529 to Garrett*.*

Further monomers copolymerizable with vinyl esters are ethylenically unsaturated, ionic monomers, for example compounds which bear at least one carboxylic acid, sulfonic acid, phosphoric acid or phosphonic acid group directly adjacent to the double bond unit, or else are bonded thereto via a spacer. Examples include:
α ,β-unsaturated C₃-C₈-monocarboxylic acids, α,β-unsaturated
C₅-C₈-dicarboxylic acids and anhydrides thereof, and monoesters of α,β-unsaturated C₄-C₈-dicarboxylic acids.

Preference is given to unsaturated monocarboxylic acids, for example acrylic acid, methacrylic acid, and crotonic acid and the anhydrides thereof; unsaturated dicarboxylic acids, for example maleic acid, fumaric acid, itaconic acid and citraconic acid and the monoesters thereof with C₁-C₁₂-alkanols such as monomethyl maleate and mono-n-butyl maleate. Further preferred ethylenically unsaturated ionic monomers are ethylenically unsaturated sulfonic acids, for example vinylsulfonic acid, 2-acrylamido-2-methylpropanesulfonic acid, 2-acryloyloxy- and 2-methacryloyloxyethanesulfonic acid, 3-acryloyloxy- and 3-methacryloyloxypropanesulfonic acid and vinylbenzenesulfonic acid, and ethylenically unsaturated phosphonic acids, for example vinylphosphonic acid.

In addition, as well as the acids mentioned, it is also possible to use the salts thereof, preferably the alkali metal salts thereof or the ammonium salts thereof and especially the sodium salts thereof, for example the sodium salts of vinylsulfonic acid and of 2-acrylamidopropanesulfonic acid.

The ethylenically unsaturated free acids mentioned are present in aqueous solution at pH 11 predominantly in the form of their conjugate bases in anionic form and can, like the salts mentioned, be referred to as anionic monomers.

Postcrosslinking comonomers (referred to in the art sometimes as self-crosslinking monomers) are the most preferred functional monomers utilized to make the copolymers of the invention. These monomers include acrylamidoglycolic acid (AGA), methyl methacrylamidoglycolate (MMAG), N-methylolacrylamide (NMA), N-methylolmethacrylamide (NMMA), allyl-N-methylolcarbamate, alkyl ethers such as the isobutoxy ethers or esters of N-methylolacrylamide, of N-methylolmethacrylamide and of allyl N-methylolcarbamate.

Also suitable as functional monomers are cross-linking epoxide-functional comonomers such as glycidyl methacrylate and glycidyl acrylate. Further examples are silicon-functional comonomers such as acryloxy-propyltri(alkoxy)silanes and methacryloxypropyltri(alkoxy)silanes, vinyltrialkoxysilanes and vinylmethyldialkoxysilanes, with alkoxy groups which can be present being, for example, methoxy, ethoxy and ethoxypropylene glycol ether radicals. Mention may also be made of useful monomers having hydroxy or CO groups, for example, hydroxyalkyl methacrylates and acrylates such as hydroxyethyl, hydroxypropyl or hydroxybutyl acrylate or methacrylate and also compounds such as diacetoneacrylamide and acetylacetoxyethyl acrylate or methacrylate, see United States Patent Application Publicaton No. 2007/0112117 of Weitzel*.*

Crosslinkers that can be used in conjunction with the present invention are also precrosslinking comonomers such as multiply ethylenically unsaturated comonomers, for example divinyl adipate, diallyl maleate, allyl methacrylate or triallyl cyanurate and the like.

The polymer compositions in the present invention may be used in connection with emulsions in general; paints, including high pigment volume paints and other decorative coatings; adhesives for porous substrates such as wood or non-porous substrates such as metals, plastics or glass; binders for fibrous substrates such as woven or nonwoven products including textiles, apparel in general, papers, scrim, engineered fabrics, glass or other mineral fibers, roofing or flooring materials; construction compositions including cementitious compositions, caulks and sealants; functional coatings for waterproofing and so forth; powders such as redispersible powders for waterproofing, adhesives and the like. Among the properties which may be enhanced are: wet scrub resistance; alkaline resistance; dimensional/Structure integrity ("Verschiebefestigkeit"); solvent resistance; dry tensile; wet bond strengths; wet bond strengths at elevated temperatures setting speed; adhesion to nonpolar substrates; impact resistance; thermal stability; strand integrity; lower water absorption; increased hydrophobicity; higher wet tensile strength and better water spot times. The inventive compositions provide additional advantages in that they can provide for using fewer ingredients in compositions used in construction; for example, utilization of lower or no plasticizers in caulk and sealant compositions where the caulks and sealants are required to meet the specifications for high performances elastomeric caulks set forth in ASTM C-920 is readily achieved.

Furthermore, there is provided in accordance with the invention a polymer composition including (i.e. obtainable by reacting) from: a) 10-90 pphwm, preferably 40-90 pphwm of vinyl acetate monomer units; b) 80-1 pphwm, preferably 30-5 pphwm of monomer units from cycloalkyl esters of a butenedioic acid, such as dicyclohexyl maleate; and c) 20-0 pphwm of a functional monomer unit. The polymer is composed and synthesized so as to be useful for one or more of: emulsions, in general; paints, including high pigment volume paints and other decorative coatings; adhesives for porous substrates such as wood or non-porous substrates such as metals, plastics or glass; binders for fibrous substrates such as woven or nonwoven products including textiles, apparel in general, papers, scrim, engineered fabrics, glass or other mineral fibers, roofing or flooring materials; construction compositions including cementitious compositions, caulks and sealants; functional coatings for waterproofing and so forth; powders such as redispersible powders for waterproofing, adhesives and the like. The cycloalkyl ester is dicyclohexyl maleate and/or dicyclohexyl fumarate or combinations thereof; i.e. a mixture of dicyclohexyl maleate and dicyclohexyl fumarate. The polymer composition typically includes from 10 to 0.1 pphwm functional monomer units such as crosslinking monomer units, preferably crosslinking monomer units in an amount of from 8-0.5 pphwm self-crosslinking monomer units.

Another embodiment is a a polymer composition comprising: a) 10-90 pphwm, preferably 40-90 pphwm of vinyl acetate monomer units; b) 80-1 pphwm, preferably 30-5 pphwm of monomer units from cycloalkyl esters of a butenedioic acid, such as dicyclohexyl maleate; c) 50-1, preferably 30-5 pphwm of monomer units from vinyl esters of α-monosubstituted fatty acids; and d) 20-0 pphwm of a functional monomer unit. Here again, the polymer is composed and synthesized so as to be useful for one or more of: emulsions, in general; paints, including high pigment volume paints and other decorative coatings; adhesives for porous substrates such as wood or non-porous substrates such as metals, plastics or glass; binders for fibrous substrates such as woven or nonwoven products including textiles, apparel in general, papers, scrim, engineered fabrics, glass or other mineral fibers, roofing or flooring materials; construction compositions including cementitious compositions, caulks and sealants; functional coatings for waterproofing and so forth; powders such as redispersible powders for waterproofing, adhesives and the like. The the α-monosubstituted monomer units are vinyl 2-ethyl hexanoate monomer units in many cases, while the cycloalkyl ester is dicyclohexyl maleate and/or dicyclohexyl fumarate as noted above. So also, functional monomers are optionally included as noted herein.

Still another embodiment is directed to another polymer composition comprising: a)10-90 pphwm, preferably 40-90 pphwm of vinyl acetate monomer units; b) 80-1 pphwm, preferably 30-5 pphwm of monomer units from cycloalkyl esters of a butenedioic acid; c) 50-0, preferably 50-1 and still more preferably 30-5 pphwm of monomer units from vinyl esters of α-monosubstituted fatty acids; d) 40-1, preferably 20-5 pphwm of an α-olefin monomer; and e) 20-0 pphwm of a functional monomer unit. These compositions are likewise suitable for one or more of: emulsions, in general; paints, including high pigment volume paints and other decorative coatings; adhesives for porous substrates such as wood or non-porous substrates such as metals, plastics or glass; binders for fibrous substrates such as woven or nonwoven products including textiles, apparel in general, papers, scrim, engineered fabrics, glass or other mineral fibers, roofing or flooring materials; construction compositions including cementitious compositions, caulks and sealants; functional coatings for waterproofing and so forth; powders such as redispersible powders for waterproofing, adhesives and the like. The α-olefin monomer is ethylene in a preferred embodiment and the other components have the features noted above and are present in the amounts specified above.

Other aspects of the invention include an article comprising a polymer of any of the embodiments noted above.

Yet another aspect of the invention is the use of the polymer compositions in the manufacture of: emulsions, in general; paints, including high pigment volume paints and other decorative coatings; adhesives for porous substrates such as wood or non-porous substrates such as metals, plastics or glass; binders for fibrous substrates such as woven or nonwoven products including textiles, apparel in general, papers, scrim, engineered fabrics, glass or other mineral fibers, roofing or flooring materials as well as the aforesaid fibrous products; construction compositions including cementitious compositions, caulks and sealants; functional coatings for waterproofing and so forth; powders such as redispersible powders for waterproofing, adhesives and the like.

Still yet another aspect of the invention is the polymer compositions of any of the foregoing embodiments grafted to a polyhydroxy polymer to form a graft copolymer.

### Examples

The following examples are presented to further illustrate the present invention and should not be taken as limiting the invention, the spirit and scope of which is set forth in the appended claims. The parts and percentages indicated in the examples are by weight unless noted otherwise.

### Abbreviations:

VA: Vinyl acetate monomer; inhibitor content 3 - 5 ppm HQ; obtained from Celanese Chemicals Europe GmbH; used as supplied, unless otherwise indicated;
DCHM: Dicyclohexyl maleate obtained from Cytec Industries;
V2EH: Vinyl 2-ethyl hexanoate monomer; stabilized with 20 ppm MEHQ; available from Japan VAM and Poval Co., Ltd.; used as supplied, unless otherwise indicated;
E: Ethylene monomer;
NMA-LF is a blend of N-methylolacrylamide/acrylamide (48% aq. solution typically) commercially available from Cytec Industries.

### Polymerization Procedures

### Comparative Example 1: Preparation of a Polymer comprising VA/NMA-LF 95/5

A similar procedure was followed to example 2 except that the vinyl 2-ethylhexanoate and dicyclohexylmaleate were both replaced by vinyl acetate. Also, the 9.36 g of a 70% aqueous solution of an alcohol ethoxylate nonionic surfactant, (Emulsogen^{™} EPN 287 from Clariant) in the first aqueous solution was replaced by 8.19 g of an 80% aqueous solution of an alcohol ethoxylate nonionic surfactant, (Emulan^{™} TO 2080 from BASF) and 1.17 g of water, and the 38.28 g of a 70% aqueous solution of an alcohol ethoxylate nonionic surfactant, (Emulsogen^{™} EPN 287 from Clariant),in the second aqueous solution was replaced by 33.49 g of an 80% aqueous solution of an alcohol ethoxylate nonionic surfactant, (Emulan TO^{™} 2080 from BASF) and 4.79 g of water. The resultant dispersion had a solids content of 49.7%, viscosity of 56 mPa.s, pH of 4.4, grit, (measured on a 40 µ mesh), of 0.12% and a Tg, (onset, by DSC), of 35.6°C.

### Example 2: Preparation of a Polymer comprising VA/DCHM/V2EH/NMA-LF 65/15/15/5

An aqueous solution was prepared by the addition of 1.33 g of a 30% aqueous solution of a secondary alkane sulfonate anionic surfactant, (Hostapur^{™} SAS 30 from Clariant), 9.36 g of a 70% aqueous solution of an alcohol ethoxylate nonionic surfactant, (Emulsogen^{™} EPN 287 from Clariant) to 902.75 g of deionized water and heated to 50°C while stirring until the surfactants were dissolved. The solution was cooled and 1.76 g of sodium bicarbonate was added. Then the aqueous solution was charged to a 3-liter glass reactor equipped with a stirrer and dropping funnels.

The reactor was heated to 65°C. A first monomer mixture comprising 84.41 g of vinyl acetate, 18.29 g of dicyclohexylmaleate, (Cylink^{™} XSM-6007 from Cytec), and 18.29 g of vinyl 2-ethylhexanoate was added to the reactor. A second monomer mixture comprising 717.26 g of vinyl acetate, 166.75 g of dicyclohexylmaleate and 166.75 g of vinyl 2-ethylhexanoate was prepared. A second aqueous solution was prepared by the addition of 2.68 g of a 30% aqueous solution of a secondary alkane sulfonate anionic surfactant, (Hostapur^{™} SAS 30 from Clariant), and 38.28 g of a 70% aqueous solution of an alcohol ethoxylate nonionic surfactant, (Emulsogen^{™} EPN 287 from Clariant), to 214.94 g of deionized water and heated to 50°C while stirring until the surfactants were dissolved. After cooling the surfactant solution 128.42 g of an approximately 48% active blend of N-methylolacrylamide and acrylamide, (Cylink^{™} NMA-LF from Cytec), 1.74 g of sodium persulfate and 1.21 g of sodium bicarbonate were added to the aqueous solution. The second monomer mixture and the second aqueous solution were mixed to form a pre-emulsion.

When the reactor temperature stabilized at 65°C, a solution of 2.67 g of sodium persulfate in 20.01 g of deionized water was added. When an exotherm was observed, the temperature was increased by external heating to 75°C. At 70°C the addition of the pre-emulsion was commenced to last 4 hours. After the addition of the pre-emulsion was complete, a solution of 0.11 g of sodium persulfate in 5.87 g of deionized water was added and the temperature was increased to 80°C for 1 hour. The reactor was then cooled to 50°C, and a solution of 2.04 g of t-butyl hydroperoxide in 12.08 g of deionized water was added over 10 minutes. Then a solution of 1.54 g of sodium metabisulfite in 12.08 g of water was added over 10 minutes. The reaction mixture was cooled and filtered through a 180µ mesh to remove coarse grit.

The resultant dispersion had a solids content of 49.4%, viscosity of 611 mPa.s, pH of 4.3, grit, (measured on a 40 µ mesh), of 0.01% and a Tg, (onset, by DSC), of 25.0°C.

### Example 3: Preparation of a Polymer comprising VA/DCHM/NMA-LF 80/15/5

A similar procedure was followed to example 2 except that the vinyl 2-ethylhexanoate was replaced by vinyl acetate. The resultant dispersion had a solids content of 49.6%, viscosity of 388 mPa.s, pH of 4.4, grit, (measured on a 40 µ mesh), of 0.013% and a Tg, (onset, by DSC), of 38.2°C.

### Example 4: Preparation of a Polymer comprising VA/DCHM/V2EH/E/NMA-LF 60/10/15/10/5

An aqueous solution was prepared by the addition of 125.8 g of a 10% aqueous solution of hydroxyethyl cellulose, having a Brookfield viscosity at 5% concentration of 100 - 180 mPa.s at 25°C, (Natrosol^{™} 250 LR from Aqualon), 282.6 g of a 70% aqueous solution of a an alcohol ethoxylate nonionic surfactant, (Emulsogen^{™} EPN 287 from Clariant), and 30.5 g of a 30% aqueous solution of a secondary alkane sulfonate anionic surfactant, (Hostapur^{™} SAS 30 from Clariant), to 2984 g of deionized water while stirring. 38.1 g of a 30% active solution of sodium vinylsulfonate was added, followed by 0.19 g of Mohr's salt, then the pH was adjusted to pH 4.4 by the use of phosphoric acid. Then the aqueous solution was charged to a 10-liter pressure reactor equipped with a stirrer, dosage pumps and a mass flow meter for dosing ethylene. The reactor was degassed by twice evacuating, then pressurizing with nitrogen to 2 bar, then finally evacuating.

The reactor was heated to 35°C. 16.76% of a monomer mixture comprising 2891.0 g of vinyl acetate, 480.3 g of dicyclohexylmaleate, (Cylink^{™} XSM-6007 from Cytec), and 722.7 g of vinyl 2-ethylhexanoate was pumped to the reactor. The vinyl 2-ethylhexanoate had previously been distilled to remove inhibitor, and stabilized by the addition of 5 ppm MEHQ. 480.3 g of ethylene was metered to the reactor, followed by 10% of a solution comprising 22.9 g of sodium metabisulfite dissolved in 274.5 g of deionized water.

When the reactor temperature stabilized at 35°C, the additions of a solution of 30.2 g of sodium persulfate dissolved in 274.5 g of deionized water and the remainder of the sodium metabisulfite solution were commenced at a constant rate to last 6 hours. The temperature was gradually increased to 80°C over a period of approximately 30 minutes, at which time the additions of the remainder of the monomer mixture and a solution of 500.3 g of an approximately 48% active blend of N-methylolacrylamide and acrylamide, (Cylink^{™} NMA-LF from Cytec), in 452.9 g of deionized water were added separately to the reactor at a constant rate over 5 hours. The reactor temperature was maintained at 80°C for the duration of the reaction.

After the reaction was complete, the reaction mixture was cooled to 50°C and transferred to a degassing vessel. A solution comprising 3.66 g of sodium metabisulfite and 0.09 g of ferrous sulphate heptahydrate in 45.7 g of deionized water was added over 5 minutes, followed by a solution comprising 4.57 g of t-butylhydroperoxide in 45.7 g of deionized water over 30 minutes. The mixture was cooled, then 0.32 g of Agitan^{™} 282 (from Münzing) and 14.64 g of a 12.5% active solution of ammonium hydroxide were added, and the resultant dispersion was filtered through a 180µ mesh. The resultant dispersion had a solids content of 50.6%, viscosity of 3140 mPa.s, pH of 3.6, grit, (measured on a 40 µ mesh), of 0.03% and a Tg, (onset, by DSC), of 2.5°C.

### Application Test Procedures

### General Sample Preparation

The procedure for preparing the test specimens was as follows: A substrate was dip-nip saturated with the polymer dispersion and then thermally dried. Whatman #1 Filter Paper sheets, commercially available from Whatman, Inc., were used as substrate and were stored under controlled temperature (23 °C) and humidity (50%) conditions before use. The filter paper was cut to approximately 265x220 mm sheets and weighed.

The polymer dispersion (incl. 1% mono ammonium phosphate) was diluted to the solids level to achieve an add-on of about 20%. The Whatman filter paper was dip-nip saturated by passing the substrate through the dispersion bath and then passing the saturated sheets through the pressurized nip rolls of a dual roller saturator (Werner Mathis VFM or a similar saturator) to squeeze off the excess polymer dispersion. The saturated sheet was then placed into an oven (Mathis) and dried at 130 °C for 10 min. The saturated, dried sheet was reconditioned at controlled temperature and humidity conditions for a minimum of 12 hours. The sheet was reweighed and % add-on was calculated.

### Water Spot Test

To test hydrophobicity, with a micropipette, a drop of demineralized water was placed on the sheet and the time was measured until the drop was fully absorbed.

### Cobb Test

Cobb test was applied according to DIN EN 20 535 (n.a. in the table means test not applicable due to a too hydrophilic polymer).

### Tensile Strength

Tensile strength was measured according to WSP 110.4 (05) WD. Therefore a 5 cm wide paper strip was clamped in a tensile testing machine (Lloyd LR100K) and a force applied to the sample until breakage occurred. Specimens to be tested in the wet condition were immersed in water at room temperature for 1 hour and tested when still wet. The tensile strength is the average of at least four measurements.

The relative wet strength was calculated as the ratio of wet tensile strength to the dry tensile strength of the sample.

**Table 1-Application Test Results**

| | Example | (Comparative) | | | |
|---|---|---|---|---|---|
| | No. | 1 | 2 | 3 | 4 |
| Latex formaldehyde | (ppm) | 83 | 111 | 89 | 241 |
| Sheet formaldehyde | (ppm) | 21 | 20 | 18 | 28 |
| | | | | | |
| Water Spot | (min) | 7 | 120 | 30 | 120 |
| Cobb | (g/m²) | n.a. | 16,2 | 46,2 | 17 |
| | | | | | |
| Tensiles | | | | | |
| Dry | (N/5 cm) | 294 | 327 | 341 | 222 |
| Wet | (N/5 cm) | 73 | 150 | 129 | 102 |
| Relative wet strength | (%) | 25 | 46 | 38 | 46 |

These results show that an improvement in hydrophobicity, wet tensile strength and retention of tensile strength after water soaking were achieved.

While the invention has been described in connection with numerous examples and embodiments, modifications within the spirit and scope of the invention will be readily apparent to those of skill in the art. In view of the foregoing discussion, relevant knowledge in the art and references including copending applications discussed above in connection with the Background and Detailed Description, the disclosures of which are all incorporated herein by reference, further description is deemed unnecessary.

## Claims

1. A polymer composition comprising a copolymer obtainable by reacting:
a) 40-90 pphwm of vinyl acetate; and
b) 40-5 pphwm of at least one cycloalkyl ester of a butenedioic acid; and optionally
c) 20-0.1 pphwm of at least one functional monomer, and/or
d) 30-5 pphwm of at least one vinyl ester of α-monosubstituted fatty acid; and/or
e) 20-5 pphwm of at least one α-olefin; and/or
f) other comonomers
wherein said copolymer is composed and synthesized so as to be useful for one or more of: emulsions, in general; paints, including high pigment volume paints and other decorative coatings; adhesives for porous substrates such as wood or non-porous substrates such as metals, plastics or glass; binders for fibrous substrates such as woven or nonwoven products including textiles, apparel in general, papers, scrim, engineered fabrics, glass or other mineral fibers, roofing or flooring materials; construction compositions including cementitious compositions, caulks and sealants; functional coatings for waterproofing and so forth; powders such as redispersible powders for waterproofing, adhesives and the like.

2. The polymer composition according to Claim 1, wherein the cycloalkyl ester is dicyclohexyl maleate and/or dicyclohexyl fumarate.

3. The polymer composition according to Claim 1, wherein the cycloalkyl esters are a mixture of dicyclohexyl maleate and dicyclohexyl fumarate.

4. The polymer composition according to Claim 1, wherein the polymer composition is obtainable by reacting from 10 to 0.1 pphwm functional monomer.

5. The polymer composition according to Claim 1, wherein said functional monomer is crosslinking monomer.

6. The polymer composition according to Claim 5, wherein said crosslinking monomer is self-crosslinking monomer.

7. The polymer composition according to Claim 1, wherein the polymer composition is obtainable by reacting from 8-0.5 pphwm self-crosslinking monomer.

8. The polymer composition according to Claim 1, wherein the vinyl ester of α-monosubstituted fatty acid is vinyl 2-ethyl hexanoate.

9. The polymer composition according to Claim 1, wherein the α-olefin monomer is ethylene.
